# EUROPEAN PATENT APPLICATION

(11) **EP 4 563 651 A1**
(43) Date of publication of application: **04.06.2025**
(21) Application number: 23219591.7
(22) Date of filing: 22.12.2023
(51) Int. Cl.: C08L 33/26, H01M 50/403, H01M 50/42, H01M 50/446, H01M 50/449, H01M 50/451, H01M 50/489, C09D 133/26, C08F 220/56

(54) **BINDER FOR COATING A SECONDARY BATTERY SEPARATOR AND A SECONDARY BATTERY COMPRISING THE SAME**

(30) Priority: 30.11.2023 KR 20230170528
(71) Applicant: Hansol Chemical Co., Ltd., Gangnam-gu Seoul 06169 (KR)
(72) Inventor: CHO, Seung Wan, 54524 Iksan-si, Jeollabuk-do (KR); LEE, Go Eun, 54524 Iksan-si, Jeollabuk-do (KR); LEE, Nam Joo, 54524 Iksan-si, Jeollabuk-do (KR); KIM, Young Su, 54524 Iksan-si, Jeollabuk-do (KR); KIM, Jin Yeong, 54524 Iksan-si, Jeollabuk-do (KR); JEONG, Jae Pil, 54524 Iksan-si, Jeollabuk-do (KR); OH, Sae Wook, 54524 Iksan-si, Jeollabuk-do (KR); KWON, Se Man, 54524 Iksan-si, Jeollabuk-do (KR)
(74) Representative: Isarpatent

(57) **Abstract**

Disclosed are a binder for coating a secondary battery separator and a secondary battery separator and a secondary battery each including the binder, wherein the binder contains a mixture of: copolymer A derived from a (meth)acrylamide-based monomer, N-vinylpyrrolidone, and a (meth)acrylic acid monomer and containing a carboxyl functional group; and copolymer B derived from a (meth)acrylamide-based monomer, N-vinylpyrrolidone, and a (meth)acrylate-based monomer and containing an alcohol functional group.

## Description

### BACKGROUND OF THE INVENTION

### 1. Field of the invention

The present disclosure relates to a binder for coating a secondary battery separator, capable of improving thermal stability of the secondary battery separator, and a secondary battery including the same.

### 2. Description of the Prior Art

Electrochemical battery separators are porous interlayer membranes that enable charging/discharging of batteries by continuously maintaining ionic conductivity while isolating cathodes and anodes within the batteries. On the other hand, the generally used polyolefin-based separators have properties of melting at low temperatures. Therefore, when batteries are exposed to high-temperature environments due to non-ideal behaviors or undergo physical impacts from the outside, separators may be mechanically shrunk or damaged, causing the contact between anodes and cathodes, resulting in the ignition of the batteries. To solve this problem, an attempt is being made on techniques capable of suppressing the shrinkage of separators and securing the stability of batteries by coating the separators with an inorganic material.

For example, Korean Patent Publication No. 10-2016-0061202 discloses a separator for a lithium secondary battery, in which a coating layer containing an acryl-based copolymer, formed by polymerization of (meth)acrylate and (meth)acrylonitrile, and a polyvinyl alcohol-based compound are disposed on one surface of a substrate. However, the disclosed separator needs to be improved in terms of heat resistance.

### Prior Art Document

### Patent Document

Korean Patent Publication No. 10-2016-0061202

### SUMMARY OF THE INVENTION

An aspect of the present disclosure is to provide a binder for coating a secondary battery separator, capable of improving thermal stability of the secondary battery separator.

Another aspect of the present disclosure is to provide a secondary battery separator containing the binder for coating a secondary battery separator.

Still another aspect of the present disclosure is to provide a secondary battery including the secondary battery separator.

In accordance with an aspect of the present disclosure, there is provided a binder for coating a secondary battery separator, the binder containing a mixture of: copolymer A derived from a (meth)acrylamide-based monomer, N-vinylpyrrolidone, and a (meth)acrylic acid monomer and containing a carboxyl functional group; and copolymer B derived from a (meth)acrylamide-based monomer, N-vinylpyrrolidone, and a (meth)acrylate-based monomer and containing an alcohol functional group.

In accordance with another aspect of the present disclosure, there is provided a secondary battery separator, including: a porous substrate; and a coating layer disposed on at least one surface of the porous substrate, wherein the coating layer is obtained by heat treatment of a mixture of: copolymer A derived from a (meth)acrylamide-based monomer, N-vinylpyrrolidone, and a (meth)acrylic acid monomer and containing a carboxyl functional group; and copolymer B derived from a (meth)acrylamide-based monomer, N-vinylpyrrolidone, and a (meth)acrylate-based monomer and containing an alcohol functional group.

In accordance with still another aspect of the present disclosure, there is provided a secondary battery including the secondary battery separator.

The binder according to the present disclosure can significantly enhance heat resistance characteristics of a separator to improve stability of a secondary battery when applied to the separator, by heat-treating a mixture of a copolymer containing a carboxyl functional group and a copolymer containing an alcohol functional group to form physical and chemical bonds between the functional groups.

### DETAILED DESCRIPTION OF THE EXEMPLARY EMBODIMENTS

Hereinafter, embodiments of the present disclosure will be described in detail. However, these are provided as exemplary embodiments, and the present disclosure is not limited thereto. The present disclosure is only defined by the scope of the claims to be described later.

The present inventors verified that the use of a mixed-type water-soluble polymer of copolymer A containing a carboxyl functional group and copolymer B containing an alcohol functional group, each of which is composed of a (meth)acrylamide-based monomer and N-vinylpyrrolidone as main components, significantly enhanced the heat resistance of a separator due to physical and chemical bonds, compared with the use of copolymer A and copolymer B alone without mixing. The present disclosure is based on this verification.

### <Preparation of binder>

An embodiment of the present disclosure provides a binder for coating a secondary battery separator, the binder containing a mixture of: copolymer A derived from a (meth)acrylamide-based monomer, N-vinylpyrrolidone, and a (meth)acrylic acid monomer and containing a carboxyl functional group; and copolymer B derived from a (meth)acrylamide-based monomer, N-vinylpyrrolidone, and a (meth)acrylate-based monomer and containing an alcohol functional group.

In the binder of the present disclosure, copolymer A and copolymer B may be water-soluble polymer resins.

The (meth)acrylamide-based monomer may be at least one selected from the group consisting of acrylamides, methacrylamides, N-substituted methacrylamides, and methacrylamides including aliphatic and/or aromatic rings.

The N-vinylpyrrolidone may be used as a monomer of poly(N-vinylpyrrolidone) and is derived from 2-pyrrolidone.

The (meth)acrylic acid monomer may be acrylic acid or methacrylic acid.

The (meth) acrylate-based monomer may be at least one selected from the group consisting of 2-hydroxy ethyl acrylate and 2-hydroxy ethyl methacrylate.

Copolymer A may be a polymer of monomers including 60 to 90 wt% of the (meth)acrylamide-based monomer, 5 to 40 wt% of N-vinylpyrrolidone, and 1 to 10 wt% of the (meth) acrylic acid monomer, relative to the total weight of the monomers.

Copolymer B may be a polymer of monomers including 60 to 90 wt% of the (meth)acrylamide-based monomer, 5 to 40 wt% of N-vinylpyrrolidone, and 1 to 10 wt% of the (meth)acrylate-based monomer, relative to the total weight of the monomers.

In one embodiment of the present disclosure, copolymer A and copolymer B may be synthesized by aqueous solution polymerization.

In the present disclosure, a cross-linked polymer resin can be formed using a small amount of a water-soluble chemical cross-linking agent, thereby improving polymer stability in an electrolyte.

Copolymer A may be represented by Chemical Formula 1 below.

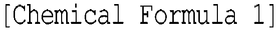

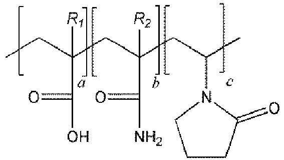

(R₁ is H or CH₃; R₂ is H or CH₃; a, b, and c each are 0 to 1; and a+b+c=1)
As shown in the above chemical formula, copolymer A may be a copolymer of a (meth)acrylamide-based monomer and N-vinylpyrrolidone, with a carboxyl functional group.

Copolymer B may be represented by Chemical Formula 2 below.

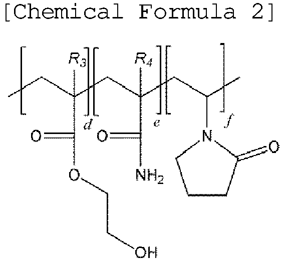

(R₃ is H or CH₃; R₄ is H or CH₃; d, e, and f each are 0 to 1; and a+b+c=1)
As shown in the above chemical formula, copolymer B may be a copolymer of a (meth)acrylamide-based monomer and N-vinylpyrrolidone, with an alcohol functional group.

In the present disclosure, a mixture of two types of water-soluble polymer resins having a carboxyl functional group or alcohol functional group, that is, copolymer A and copolymer B, was used as a binder, having superior heat resistance characteristics, for coating a separator.

In the present disclosure, a simple mixture of copolymer A and copolymer B is used as a binder.

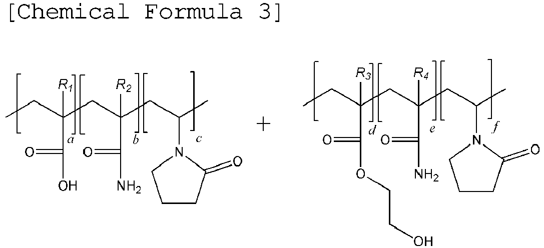

(R₁ is H or CH₃; R₂ is H or CH₃; a, b, and c each are 0 or 1; a+b+c=1; R₃ is H or CH₃; R₄ is H or CH₃; d, e, and f each are 0 or 1; and d+e+f=1)
Instead of the mixture of copolymer A and copolymer B, when copolymers of a (meth)acrylamide-based monomer and N-vinylpyrrolidone containing both a carboxyl functional group and an alcohol functional group in one polymer chain are polymerized, physical and chemical bonds may be formed between the carboxyl functional group and the alcohol functional group to result in gelation, during the polymerization process.

Therefore, in the present disclosure, a simple mixture, in which copolymer A and copolymer B co-exist as shown in Chemical Formula 3 above, may be used as a binder.

In the mixture, copolymer A and copolymer B may be mixed at a weight ratio of 2:8 to 8:2.

Preferably, copolymer A and copolymer B may be mixed at a weight ratio of 3:7 to 7:3.

The mixture of copolymer A and copolymer B, which was coated on the separator and subjected to heat treatment, showed an enhancement in heat resistance compared with the use of a water-soluble polymer resin of copolymer A or copolymer B alone or a separator not subjected to heat treatment.

The reason is that a hydrogen bond (physical bond) is formed as a result of the interaction between the carboxyl functional group (-COOH) and the alcohol functional group (-OH) contained in the polymer and an ester (-COO-) bond (chemical bond) is formed as a result of the condensation between the alcohol functional group (-OH) and the carboxyl functional group (-COOH) occurring by the removal of water.

In the present disclosure, the mixture of copolymer A and copolymer B is subjected to heat treatment at 50 to 100°C for 30 minutes to 24 hours to form physical and chemical bonds between the functional groups.

In an embodiment of the present disclosure, the mixture of copolymer A and copolymer B is coated on the separator, followed by heat treatment.

The copolymers for the binder used in the present disclosure may contain, in addition to the monomers, other monomers copolymerizable therewith. Examples of the other polymerizable monomers may include styrene-based monomers, olefins, diene-based monomers, halogen atom-containing monomers, vinyl acetates, vinyl esters, vinyl ethers, vinyl ketones, heterocyclic vinyl compounds, and amide-based monomers.

The copolymers may have various forms, such as an alternate polymer where the structural units are alternately distributed, a random polymer the structural units are randomly distributed, or a graft polymer where some structural units are grafted.

Examples of a polymerization initiator for use in polymerization may include: organic peroxides, such as lauroyl peroxide, diisopropyl peroxydicarbonate, di-2-ethylhexyl peroxydicarbonate, t-butyl peroxypivalate, and 3,3,5-trimethylhexanoyl peroxide; azo compounds, such as α,α'-azobisisobutyronitrile; ammonium persulfate; and potassium persulfate.

The temperature for polymerization may be 50 to 90°C.

A metal hydroxide may be used to adjust the pH of the polymers. Preferably, NaOH or LiOH may be used as a metal hydroxide.

Another embodiment of the present disclosure provides a slurry for coating a separator, the slurry containing the binder, inorganic particles, and a solvent.

The inorganic particles, when contained in the coating layer, can further prevent the shrinkage of the separator caused by heat, thereby suppressing a short circuit between a cathode and an anode and minimizing the resistance of lithium ions, leading to an improvement in performance of the battery.

Examples of the inorganic particles may include SiO₂, alumina (Al₂O₃), Al(OH)₃, AlO (OH), TiO₂, BaTiO₃, Mg(OH)₂, MgO, Ti(OH)₄, clay, a glass powder, or a combination thereof.

The inorganic particles are preferably mixed with the mixture of copolymer A and copolymer B at a ratio (solid content ratio) of 15-35: 65-85, but the composition of the solid content ratio is not limited, and the thickness, pore size, and porosity of the coated separator are determined according to the composition.

Although water and organic solvents may be used as the solvent, any solvent that has a similar solubility parameter to the copolymer dispersion is preferable. The amount of the solvent is adjusted such that the solid content concentration is preferably 5 to 90 wt%, more preferably 10 to 50 wt%.

A slurry mixing apparatus is not particularly limited as long as the apparatus can uniformly mix the above components, and for example, a ball mill, sand mill, a pigment disperser, a grinder, an ultrasonic disperser, a homogenizer, a planetary mixer, or the like may be used. In particular, a high dispersion device, such as a bead mill, a roll mill, or a FILMIX mixer, capable of adding high dispersion shear are preferable.

### <Preparation of inorganic material-coated separator>

Another embodiment of the present disclosure provides a secondary battery separator, including: a porous substrate; and a coating layer disposed on at least one surface of the porous substrate, wherein the coating layer contains copolymer A derived from a (meth)acrylamide-based monomer, vinylpyrrolidone, and a (meth)acrylic acid monomer and containing a carboxyl group, and copolymer B derived from a (meth)acrylamide-based monomer, vinylpyrrolidone, and a (meth)acrylate-based monomer and containing an alcohol group.

The secondary battery separator is configured to separate an anode and a cathode from each other and provide a moving passage for lithium ions, and may include a porous substrate and a coating layer disposed on at least one surface of the porous substrate.

The porous substrate may have a plurality of pores and may be a substrate commonly used in electrochemical devices. The porous substrate may be non-limitedly a polymer membrane formed of any one polymer selected from the group consisting of polyolefins such as polyethylene and polypropylene, polyesters such as polyethylene terephthalate and polybutylene terephthalate, polyacetals, polyamides, polyimides, polycarbonates, polyetheretherketones, polyaryletherketones, polyetherimides, polyamideimides, polybenzimidazoles, polyethersulfones, polyphenylene oxides, cyclic olefin copolymers, polyphenylene sulfides, polyethylene naphthalates, glass fibers, Teflon, and polytetrafluoroethylenes, or a copolymer or mixture of at least two thereof.

The porous substrate may have a thickness of about 1 µm to 40 µm, for example, 1 µm to 30 µm, 1 µm to 20 µm, 5 µm to 15 µm, or 10 µm to 15 µm.

The coating layer may contain, as a binder, a mixture of: copolymer A derived from a (meth)acrylamide-based monomer, vinylpyrrolidone, and a (meth)acrylic acid monomer and containing a carboxyl group; and copolymer B derived from a (meth)acrylamide-based monomer, vinylpyrrolidone, and a (meth)acrylate-based monomer and containing an alcohol group, the mixture being subjected to heat treatment. The use of the copolymer mixture as a binder in the formation of the coating layer on the substrate can enhance the heat resistance of the porous substrate, thereby enhancing heat resistance characteristics of the separator.

The coating layer may be disposed on one surface of the substrate by applying the slurry for coating a separator on the porous substrate.

The slurry for coating a separator is as described above.

A method of applying the slurry for coating a separator on the porous substrate is not particularly limited. For example, dip coating, die coating, gravure coating, comma coating, or the like may be used.

Examples of the drying method may include drying by warm air, hot air, or low-humidity air, vacuum drying, and drying by irradiation of (far-)infrared light and electron beams. The drying temperature varies depending on the type of solvent used. Water or an organic solvent may be used as a solvent, but any solvent that has a similar solubility parameter to the copolymer dispersion is preferable.

The drying temperature is preferably in the range of 40 to 80°C.

The thickness of the coating layer is preferably 1 to 6 µm on one or both surfaces. A thickness of less than 1 um may significantly diminish the heat resistance characteristics of the separator, whereas a thickness exceeding 6 um may reduce the energy density and increase the resistance due to the separator being excessively thick.

Another embodiment of the present disclosure provides a secondary battery including the secondary battery separator.

The secondary battery may include a cathode, an anode, an electrolyte, and the secondary battery separator.

The secondary battery may be a lithium-ion secondary battery.

Hereinafter, the present disclosure will be described with reference to examples. However, the present disclosure is not limited to the examples. In addition, unless specifically indicated otherwise, parts and percentages (%) in the present examples are based on weight.

### <Preparation Examples>

### Preparation of polymers of binder copolymers

To a reaction container, 620 parts by weight of distilled water was added, and then the temperature was raised to 70°C while high-purity nitrogen was injected. To the reaction container prepared to have a temperature of 70°C, 0.1 to 0.5 parts by weight of ammonium persulfate as a decomposition initiator and 0.01 to 0.3 parts by weight of methylene-bis-acrylamide (MBA) were added and 100 parts by weight of monomer mixtures were added, followed by continuous solution polymerization, thereby preparing a polymer of copolymer A and a polymer of copolymer B, respectively.

### Preparation of mixed-type water-soluble polymer resin

The polymer of copolymer A and the polymer of copolymer B having a carboxyl function group and an alcohol functional group, respectively, were mixed at a ratio of 3:7, 5:5, and 7:3 to prepare mixed-type water-soluble polymer resins (polymer C) with enhanced heat resistance.

### Preparation of slurry for coating separator

Alumina (average particle diameter of 0.5 um) as inorganic particles and a polymer binder (A or mixed-type polymer C) were mixed at a ratio of 96:4 (solid content ratio), and distilled water was further added so that the solid content concentration was 35%. The mixture was sufficiently dispersed through ball milling or a mechanical stirrer to prepare a slurry.

### Preparation of inorganic material-coated separator

The prepared slurry was applied to one surface of a polyethylene porous substrate by die coating to form a coating layer with a thickness of 2 µm, and then dried by hot air at a temperature of 60 to 80°C to prepare an inorganic material-coated separator.

### <Example 1>

This example was basically the same as the preparation examples. Specifically, 65 parts by weight of a (meth)acrylamide-based monomer, 25 parts by weight of N-vinylpyrrolidone, and 10 parts by weight of a (meth)acrylic acid monomer were subjected to aqueous polymerization (copolymer A). Copolymer A was coated on a separator, and then the coated separator was subjected to heat treatment at a temperature of 100°C for about 12 hours or longer, thereby achieving the synthesis of a binder for a secondary battery and the preparation of a separator using the binder.

### <Example 2>

This example was basically the same as the preparation examples. Specifically, 65 parts by weight of a (meth)acrylamide-based monomer, 25 parts by weight of N-vinylpyrrolidone, and 10 parts by weight of a (meth)acrylate-based monomer were subjected to aqueous polymerization (copolymer B). Copolymer B was coated on a separator, and then the coated separator was subjected to heat treatment at a temperature of 100°C for about 12 hours or longer, thereby achieving the synthesis of a binder for a secondary battery and the preparation of a separator using the binder.

### <Example 3>

This example was basically the same as the preparation examples. Specifically, 65 parts by weight of a (meth)acrylamide-based monomer, 25 parts by weight of N-vinylpyrrolidone, and 10 parts by weight of a (meth)acrylic acid monomer (copolymer A) and 65 parts by weight of a (meth)acrylamide-based monomer, 25 parts by weight of vinyl pyrrolidone, and 10 parts by weight of a (meth)acrylate-based monomer (copolymer B) were separately subjected to aqueous polymerization. A mixture (C3-7) was prepared by mixing prepared copolymer A and copolymer B at a weight ratio of 3:7, and then coated on a separator. Subsequently, the coated separator was subjected to heat treatment at a temperature of 100°C for about 12 hours or longer, thereby achieving the synthesis of a binder for a secondary battery and the preparation of a separator with enhanced heat resistance using the binder.

### <Example 4>

This example was basically the same as the preparation examples. Specifically, 65 parts by weight of a (meth)acrylamide-based monomer, 25 parts by weight of N-vinylpyrrolidone, and 10 parts by weight of a (meth)acrylic acid monomer (copolymer A) and 65 parts by weight of a (meth)acrylamide-based monomer, 25 parts by weight of vinyl pyrrolidone, and 10 parts by weight of a (meth)acrylate-based monomer (copolymer B) were separately subjected to aqueous polymerization. A mixture (C5-5) was prepared by mixing prepared copolymer A and copolymer B at a weight ratio of 5:5, and then coated on a separator. Subsequently, the coated separator was subjected to heat treatment at a temperature of 100°C for about 12 hours or longer, thereby achieving the synthesis of a binder for a secondary battery and the preparation of a separator with enhanced heat resistance using the binder.

### <Example 5>

This example was basically the same as the preparation examples. Specifically, 65 parts by weight of a (meth)acrylamide-based monomer, 25 parts by weight of N-vinylpyrrolidone, and 10 parts by weight of a (meth)acrylic acid monomer (copolymer A) and 65 parts by weight of a (meth)acrylamide-based monomer, 25 parts by weight of vinyl pyrrolidone, and 10 parts by weight of a (meth)acrylate-based monomer (copolymer B) were separately subjected to aqueous polymerization. A mixture (C7-3) was prepared by mixing prepared copolymer A and copolymer B at a weight ratio of 7:3, and then coated on a separator. Subsequently, the coated separator was subjected to heat treatment at a temperature of 100°C for about 12 hours or longer, thereby achieving the synthesis of a binder for a secondary battery and the preparation of a separator with enhanced heat resistance using the binder.

### <Comparative Example 1>

This example was basically the same as the preparation examples. Specifically, 65 parts by weight of a (meth)acrylamide-based monomer, 25 parts by weight of vinyl pyrrolidone, and 10 parts by weight of a (meth)acrylic acid monomer (copolymer A) were subjected to aqueous polymerization, and then coated on a separator. Thereafter, without heat treatment of the coated separator, the synthesis of a binder for a secondary battery and the preparation of a separator using the binder were achieved.

### <Comparative Example 2>

This example was basically the same as the preparation examples. Specifically, 65 parts by weight of a (meth)acrylamide-based monomer, 25 parts by weight of vinyl pyrrolidone, and 10 parts by weight of a (meth)acrylate-based monomer (copolymer B) were subjected to aqueous polymerization, and then coated on a separator. Thereafter, without heat treatment of the coated separator, the synthesis of a binder for a secondary battery and the preparation of a separator using the binder were achieved.

### <Comparative Example 3>

This example was basically the same as the preparation examples. Specifically, 65 parts by weight of a (meth)acrylamide-based monomer, 25 parts by weight of N-vinylpyrrolidone, and 10 parts by weight of a (meth)acrylic acid monomer (copolymer A) and 65 parts by weight of a (meth)acrylamide-based monomer, 25 parts by weight of vinyl pyrrolidone, and 10 parts by weight of a (meth)acrylate-based monomer (copolymer B) were separately subjected to aqueous polymerization. A mixture (C3-7) was prepared by mixing prepared copolymer A and copolymer B at a weight ratio of 3:7, and then coated on a separator. Thereafter, without heat treatment of the coated separator, the synthesis of a binder for a secondary battery and the preparation of a separator using the binder were achieved.

### <Comparative Example 4>

This example was basically the same as the preparation examples. Specifically, 65 parts by weight of a (meth)acrylamide-based monomer, 25 parts by weight of N-vinylpyrrolidone, and 10 parts by weight of a (meth)acrylic acid monomer (copolymer A) and 65 parts by weight of a (meth)acrylamide-based monomer, 25 parts by weight of vinyl pyrrolidone, and 10 parts by weight of a (meth)acrylate-based monomer (copolymer B) were separately subjected to aqueous polymerization. A mixture (C5-5) was prepared by mixing prepared copolymer A and copolymer B at a weight ratio of 5:5, and then coated on a separator. Thereafter, without heat treatment of the coated separator, the synthesis of a binder for a secondary battery and the preparation of a separator using the binder were achieved.

### <Comparative Example 5>

This example was basically the same as the preparation examples. Specifically, 65 parts by weight of a (meth)acrylamide-based monomer, 25 parts by weight of N-vinylpyrrolidone, and 10 parts by weight of a (meth)acrylic acid monomer (copolymer A) and 65 parts by weight of a (meth)acrylamide-based monomer, 25 parts by weight of vinyl pyrrolidone, and 10 parts by weight of a (meth)acrylate-based monomer (copolymer B) were separately subjected to aqueous polymerization. A mixture (C7-3) was prepared by mixing prepared copolymer A and copolymer B at a weight ratio of 7:3, and then coated on a separator. Thereafter, without heat treatment of the coated separator, the synthesis of a binder for a secondary battery and the preparation of a separator using the binder were achieved.

### <Comparative Example 6>

This example was basically the same as the preparation examples. To prepare a copolymer of a (meth)acrylamide-based monomer and N-vinylpyrrolidone having a carboxyl functional group and an alcohol functional group, respectively, 60 parts by weight of a (meth)acrylamide-based monomer, 20 parts by weight of N-vinylpyrrolidone, and 10 parts by weight of a (meth)acrylate-based monomer were subjected to aqueous polymerization, but gelation occurred during the polymerization process.

**TABLE 1**

| Type of binder for secondary battery and with or without heat treatment | | | | |
|---|---|---|---|---|
| Classification | Polymer binder Type | Copolymer composition (weight ratio of copolymer A and copolymer B) | Copolymer composition (molar ratio of functional groups) | With or without 80°C heat treatment |
| Example 1 | Copolymer A | 10 : 0 | 10 : 0 | ○ |
| Example 2 | Copolymer B | 0 : 10 | 0 : 10 | ○ |
| Example 3 | C3-7 | 3 : 7 | 4 : 6 | ○ |
| Example 4 | C5-5 | 5 : 5 | 6 : 4 | ○ |
| Example 5 | C7-3 | 7 : 3 | 8 : 2 | ○ |
| Comparative Example 1 | Copolymer A | 10 : 0 | 10 : 0 | X |
| Comparative Example 2 | Copolymer B | 0 : 10 | 0 : 10 | X |
| Comparative Example 3 | C3-7 | 3 : 7 | 4 : 6 | X |
| Comparative Example 4 | C5-5 | 5 : 5 | 6 : 4 | X |
| Comparative | C7-3 | 7 : 3 | 8 : 2 | X |
| Example 5 | | | | |

### Experimental Example 1: Heat shrinkage rates of coated separators (dry heat resistance)

Each of the separators prepared using the binders of the examples and comparative examples was used to prepare a specimen with a width and a length of 5×5 cm. The specimen was subjected to heat treatment by being left in an oven at 100°C for 0 or 12 hours. Thereafter, the identical specimen was left in an oven at 150°C for 1 hour and then measured for the final shrinkage rate, and the results are shown in Table 2 below.

### Experimental Example 2: Heat shrinkage rates of coated separators in electrolyte (wet heat resistance)

Each of the separators prepared using the binders of the examples and comparative examples was used to prepare a specimen with a width and a length of 5×5 cm. The specimen was subjected to heat treatment by being left in an oven at 100°C for 0 or 12 hours. Thereafter, an electrolyte and the specimen were placed in a pouch, sealed, and then impregnated for about 12 hours. After a gas outlet was made in the prepared pouch, the pouch was left in an oven at 150°C for 1 hour, and then the specimen was taken out and measured for the shrinkage rate. The results are shown in Table 2 below.

**TABLE 2**

| Heat shrinkage rates of polymer-coated separators (%) | | | |
|---|---|---|---|
| Classification | Heat shrinkage rate after heat treatment (%) [MD/TD] | Final dry heat shrinkage rate (%) [MD/TD] | Final wet heat shrinkage rate (%) [MD/TD] |
| Example 1 | 2/2 | 7/8 | 35/34 |
| Example 2 | 1/1 | 7/6 | 31/31 |
| Example 3 | 1/2 | 5/5 | 22/24 |
| Example 4 | 1/2 | 5/5 | 27/30 |
| Example 5 | 1/1 | 3/4 | 28/31 |
| Comparative Example 1 | - | 7/7 | 34/34 |
| Comparative Example 2 | - | 7/6 | 30/31 |
| Comparative Example 3 | - | 6/7 | 31/31 |
| Comparative Example 4 | - | 6/6 | 31/32 |
| Comparative Example 5 | - | 6/7 | 30/31 |

The examples on Table 2 show the shrinkage rates of the coated separators subjected to heat treatment according to the present disclosure. Compared with the separator coated with copolymer A or B having only one functional group, the separators coated with mixtures C having both a carboxyl functional group and an alcohol functional group showed a smaller dry shrinkage rate. In the examples, the coated separators were shrunk by 1 to 2% by being subjected to heat treatment at 100°C for about 12 hours or longer, and when the specimens subjected to heat treatment were left in an oven at 150°C for 1 hour, the separator coated with copolymer A or B having only one functional group showed a final dry heat shrinkage rate of 5% or more, whereas the separators coated with mixtures C having both a carboxyl functional group and an alcohol functional group showed a final dry heat shrinkage rate of less than 5%.

Particularly, like in Example 5, when the amount of the carboxyl functional group exceeded that of the alcohol functional group, the dry heat shrinkage rate was more favorable. This attributed to the carboxyl functional group interacting with not only the alcohol functional group but also an amide functional group present in the polymer resin.

The comparative examples on Table 2 show the shrinkage rates of the coated separators not subjected to heat treatment. All the coated separators of the comparative examples showed a final dry heat shrinkage of 5% or more. This is similar to the values in Examples 1 and 2 where the interaction between functional groups did not occur during the heat treatment process.

The enhancement in heat resistance through heat treatment attributed to the linkage of the carboxyl functional group (-COOH) and the alcohol functional group (-OH) contained in the particulate polymer and the chain polymer. The heat resistance performance of the polymer was enhanced by the formation of a new ester functional group (-COO-) and a hydrogen bond by bonding between functional groups at a temperature of 100°C during the heat treatment process, and the formation of these bonds led to an enhancement in heat resistance performance of the corresponding polymer mixture-coated separators.

The final wet heat shrinkage rate was also similar to the final dry heat shrinkage rate as shown in Table 2, and the coating and heat treatment of mixture C showed the best final wet heat shrinkage rate. However, Example 3 containing an excess of the alcohol functional group showed a more favorable value in the final wet heat shrinkage rate. This difference was due to a difference in affinity between the functional groups in the electrolyte and the functional groups in the polymer resin.

## Claims

1. A binder for coating a secondary battery separator, the binder comprising a mixture of:
copolymer A derived from a (meth)acrylamide-based monomer, N-vinylpyrrolidone, and a (meth)acrylic acid monomer and containing a carboxyl functional group; and
copolymer B derived from a (meth)acrylamide-based monomer, N-vinylpyrrolidone, and a (meth)acrylate-based monomer and containing an alcohol functional group.

2. The binder of claim 1, wherein copolymer A is a polymer of monomers including 60 to 90 wt% of the (meth) acrylamide-based monomer, 5 to 40 wt% of N-vinylpyrrolidone, and 1 to 10 wt% of the (meth)acrylic acid monomer, relative to the total weight of the monomers.

3. The binder of claim 1, wherein copolymer B is a polymer of monomers including 60 to 90 wt% of the (meth) acrylamide-based monomer, 5 to 40 wt% of N-vinylpyrrolidone, and 1 to 10 wt% of the (meth)acrylate-based monomer, relative to the total weight of the monomers.

4. The binder of claim 1, wherein in the mixture, copolymer A and copolymer B are mixed at a weight ratio of 2:8 to 8:2.

5. The binder of claim 1, wherein the (meth)acrylic acid monomer is acrylic acid or methacrylic acid.

6. The binder of claim 1, wherein the (meth)acrylate-based monomer is at least one selected from the group consisting of 2-hydroxy ethyl acrylate and 2-hydroxy ethyl methacrylate.

7. The binder of claim 1, wherein heat treatment is performed at 50 to 100°C for 30 minutes to 24 hours.

8. A secondary battery separator comprising:
a porous substrate; and
a coating layer disposed on at least one surface of the porous substrate,
wherein the coating layer is obtained by heat treatment of a mixture of: copolymer A derived from a (meth)acrylamide-based monomer, N-vinylpyrrolidone, and a (meth)acrylic acid monomer and containing a carboxyl functional group; and copolymer B derived from a (meth)acrylamide-based monomer, N-vinylpyrrolidone, and a (meth)acrylate-based monomer and containing an alcohol functional group.

9. The secondary battery separator of claim 8, wherein the porous substrate is a polymer membrane formed of any one polymer selected from the group consisting of polyolefins, polyesters, polyacetals, polyamides, polyimides, polycarbonates, polyetheretherketones, polyaryletherketones, polyetherimides, polyamideimides, polybenzimidazoles, polyethersulfones, polyphenylene oxides, cyclic olefin copolymers, polyphenylene sulfides, polyethylene naphthalates, glass fibers, Teflon, and polytetrafluoroethylenes, or a copolymer or mixture of at least two thereof.

10. The secondary battery separator of claim 8, wherein the coating layer is formed by applying a slurry for coating a separator on the porous substrate.

11. The secondary battery separator of claim 10, wherein the slurry for coating a separator contains the binder of any one of claims 1 to 7, inorganic particles, and a solvent.

12. The secondary battery separator of claim 11, wherein the inorganic particles include SiO₂, alumina (Al₂O₃), Al(OH)₃, AlO(OH), TiO₂, BaTiO₃, Mg(OH)₂, MgO, Ti(OH)₄, clay, a glass powder, or a combination thereof.

13. The secondary battery separator of claim 11, wherein the inorganic particles are mixed with the mixture of copolymer A and copolymer B at a ratio (solid content ratio) of 15:35 to 65:85.

14. The secondary battery separator of claim 8, wherein the coating layer has a thickness of 1 to 6 µm.

15. A secondary battery comprising the secondary battery separator of any one of claims 8 to 14.
